**Europäisches Patentamt**

(19) **European Patent Office**

**Office européen des brevets**

(11) Veröffentlichungsnummer: **0 007 385**
**B1**

(12) # EUROPÄISCHE PATENTSCHRIFT

(45) Veröffentlichungstag der Patentschrift:
**29.09.82**

(51) Int. Cl.³: **B 01 D 45/08,** B 01 D 50/00,
A 47 J 36/38, E 04 F 17/02

(21) Anmeldenummer: **79100616.6**

(22) Anmeldetag: **02.03.79**

(54) **Filter zur Ausfilterung von fettartigen Teilchen aus einem Gasstrom, insbesondere aus Küchenabluft, sowie Abluftkanal hierfür.**

(30) Priorität: **26.07.78 DE 2832864**

(43) Veröffentlichungstag der Anmeldung:
**06.02.80 Patentblatt 80/3**

(45) Bekanntmachung des Hinweises auf die Patenterteilung:
**29.09.82 Patentblatt 82/39**

(84) Benannte Vertragsstaaten:
**BE CH FR GB IT LU NL SE**

(56) Entgegenhaltungen:
**DE-A-329 827**
**DE-A-1 934 276**
**FR-A-2 349 356**
**GB-A-1 157 466**
**US-A-692 390**
**US-A-752 418**
**US-A-1 134 633**
**US-A-1 159 073**
**US-A-2 874 627**
**US-A-3 834 135**
**US-A-3 955 949**
**US-A-3 960 526**

(73) Patentinhaber: **Schmalhofer, Markus,
Isarauerstrasse 61, D-8351 Aholming (DE)**

(72) Erfinder: **Schmalhofer, Markus, Isarauerstrasse 61,
D-8351 Aholming (DE)**

(74) Vertreter: **Kuhnen, Rainer Andreas, Dipl.-Ing. et al,
Kuhnen & Wacker Patentanwälte
Schneggstrasse 3-5 Postfach 1729, D-8050 Freising (DE)**

# Filter zur Ausfilterung von fettartigen Teilchen aus einem Gasstrom, insbesondere aus Küchenabluft, sowie Abluftkanal hierfür

Die Erfindung betrifft ein Filter nach dem Oberbegriff des Anspruchs 1 sowie einen zur Verwendung mit einem solchen Filter besonders geeigneten Abluftkanal.

Zur Ausfilterung von Fetteilchen od.dgl. insbesondere aus der Abluft von Grossküchen werden im Abluftkanal hinter den Absaughauben im allgemeinen als Haufwerkfilter oder Feststoffbettfilter ausgebildete Filtereinheiten verwendet. In derartigen Filtern ist zwischen beispielsweise als Siebwänden ausgebildeten Begrenzungen ein Feststoffbett aus beispielsweise Aktivkohle bestimmter Körnung angeordnet, welche die in der Abluft enthaltenen Fetteilchen bindet.

Neben einem vergleichsweise hohen spezifischen Strömungswiderstand ist Hauptnachteil derartiger Filter, dass bei hohem Anfall an Verunreinigungen in der Abluft die Aufnahmefähigkeit des Feststoffbettes relativ schnell überschritten wird und das Filter dann, neben einer weiteren Erhöhung des Strömungswiderstandes, kaum noch wirksam ist. Beim Erreichen der Sättigung des Feststoffbettes mit Verunreinigungen muss das Filter bzw. das Feststoffbett ausgewechselt werden. Wird dies, was im rauhen Küchenbetrieb häufig der Fall ist, übersehen, so gelangen die Fetteilchen auch in den Bereich des Abluftkanales hinter den Filtern. Nicht zuletzt aus diesem Grunde sind behördlich bestimmte Sicherungsmassnahmen gegen eine Brandgefahr auch in der Kanalführung stromab der Filter zu beachten, was nicht unerheblichen Aufwand verursacht.

Weiterhin sind – auch speziell für die Filterung von Küchenabluft – vielfach Prallflächenfilter bekannt, deren insbesondere stabförmige Prallelemente die Fett- oder Ölpartikel beim Auftreffen auf die Prallelemente binden sollen. Insbesondere auf dem Gebiet der Küchenabluftfilterung konnten derartige Prallflächenfilter sich jedoch in der Praxis bislang nicht in breitem Masse durchsetzen, weil die Abscheideleistung bei wirtschaftlichem Herstellungsaufwand sich als zu gering erwies.

Aus der US-A-692 390 ist ein Prallflächenfilter der im Oberbegriff des Anspruchs 1 umrissenen Gattung bekannt, welches insbesondere zur Abscheidung von Wasser, Öl usw. aus Abdampf dient. Die Stäbe dieses Filters bestehen aus übereinander angeordneten einzelnen Abschnitten mit veränderlichem Stabquerschnitt. Der Stabquerschnitt ist dabei so gewählt, dass im oberen Teil jedes Abschnittes ein fast halbkreisförmiger Vollquerschnitt vorliegt, der praktisch noch keine Rinne bildet, während die anströmseitige Vorderfläche des Stabes über die Höhe jedes Abschnittes auf dessen unteres Ende zu zunehmend zurücktritt und unter Angleichung an die Form der etwa halbkreisförmigen abströmseitigen Oberfläche die Rinnenform immer stärker ausbildet. Der Übergang am unteren Ende eines oberen Abschnittes zum oberen Ende eines darunterliegenden Abschnittes bildet eine ausgeprägte Stufe, da das obere Ende des unteren Abschnittes wiederum fast vollständigen Halbkreisquerschnitt besitzt. Die Oberseite dieser Stufe bildet mit der Rinne des darüberliegenden Abschnittes eine Tasche, in die abgeschiedene Flüssigkeit sowohl unter Schwerkrafteinwirkung als auch unter dem Strömungsdruck der Gasströmung hineingedrückt wird. Um zu vermeiden, dass sich Flüssigkeit in dieser Tasche ansammelt, ist im Grund der Tasche eine Durchtrittsöffnung vorgesehen, durch welche hindurch sich ansammelnde Flüssigkeit zu einer Vertikalbohrung im Fleisch des Stabes gelangen kann, welcher als Ablaufkanal für die Flüssigkeit dient.

Eine solche Ausbildung des Filters weist zunächst den Nachteil eines erheblichen Herstellungsaufwandes auf, da die komplizierte Ausbildung der einzelnen Abschnitte an der anströmseitigen Vorderfläche jedes einzelnen Stabes in der Herstellung ausserordentlich aufwendig ist. Darüber hinaus ergeben sich funktionelle Nachteile dadurch, dass die anströmseitige Rinne zwar zum Auffangen und Ableiten mitgeführter Flüssigkeit wirksam ist, jedoch nur einen sehr geringen Beitrag zur Verwirbelung der Strömung und zum Auszentrifugieren der Schwebeteilchen in grösserem Umfange leisten kann. Dies schon deshalb, weil die Rinne nur über einen Bruchteil der Längserstreckung jedes Stabes voll ausgebildet vorliegt, vor allem aber deshalb, weil sich in den rinnenförmigen Taschen ein ausgeprägtes Luftpolster bildet, welches ein Eindringen der wirbelnden Luftströmung in den Innenraum der Rinne weitgehend unterbindet. An denjenigen Stellen also, an denen die Rinne entsprechend tief voll ausgebildet ist, können keine Luftwirbel eindringen und dort Schwebeteilchen ablagern, da dort ein ausgeprägtes stehendes Luftpolster vorhanden ist, und an Stellen ohne ausgeprägte Rinnenform, also im oberen Bereich jedes einzelnen Abschnittes, trifft die Strömung auf eine fast ebene, quer zur Strömung liegende Oberfläche, welche die Strömung seitlich abdrängt und so ebenfalls ein ausgeprägtes Auszentrifugieren von Schwebeteilchen nicht begünstigt. Aus diesem Grunde stehen die Stäbe des bekannten Filters auch ausserordentlich eng nebeneinander und bilden in jeder Ebene praktisch eine geschlossene Oberfläche mit nur schmalen vertikalen Durchtrittsöffnungen. Neben der Verwendung einer hohen Anzahl aufwendig herzustellender Stäbe ergibt sich hierdurch ein ganz erheblicher Strömungswiderstand auf die Gasströmung. Insbesondere bei relativ niedrigen Strömungsgeschwindigkeiten umströmt dennoch ein nicht unerheblicher Teil der Gase die Stäbe in vergleichsweise weichen Strömungsbiegungen und führt dabei Schwebeteilchen durch das Filter hindurch.

Demgegenüber liegt der Erfindung die Aufgabe zugrunde, ein Filter der im Oberbegriff des Anspruchs 1 umrissenen Gattung zu schaffen, welches bei leichter und kostengünstiger Herstellbarkeit eine vollständigere Abscheidung der öligen oder fettigen Partikel auch bei relativ geringer Durchströmgeschwindigkeit ergibt.

Die Lösung dieser Aufgabe erfolgt durch die kennzeichnenden Merkmale des Anspruchs 1.

Dadurch, dass die Durchtrittsöffnungen als langlochartige Durchbrüche ausgebildet sind, die auf der abströmseitigen Oberfläche der Stäbe ausmünden, wird im Inneren der Rinne nicht die abgeschiedene Flüssigkeit, sondern vielmehr das auf die Rinne auftreffende Gas abgeführt und so die Ausbildung eines Gaspolsters je nach Bedarf vermindert oder ganz vermieden. Somit kann die ankommende Strömung sich an den Vorderkanten der Schenkel der zur Anströmseite hin offenen Rinne brechen und in den Innenraum der Rinne hineinwirbeln. Durch diese Wirbelbildung werden Schwebeteilchen auszentrifugiert und gegen die Innenwand der Rinne geschleudert, von wo sie unter Schwerkrafteinwirkung ablaufen können, während das Gas durch die Durchbrüche wieder aus dem Innenraum der Rinne gelangt, um folgenden Wirbeln einen ungehinderten Zutritt zu ermöglichen. Irgendwelche abschnittsweise unterschiedliche Querschnittsausbildungen der Rinne sind dabei nicht erforderlich, so dass als Prallelemente ganz einfach auf dem Markt erhältliche Profilstäbe unverändert verwendet werden können und lediglich auf Länge geschnitten sowie mit den entsprechenden Durchtrittsöffnungen versehen werden müssen. Durch die intensive Verwirbelung an den vorderen Rändern der Schenkel der Rinnen mit Wirbelbildung sowohl in die Rinne hinein als auch in den Windschatten des Stabes hinein ist es möglich, den gegenseitigen Abstand der Stäbe einer Reihe ohne Verminderung der Abscheidungsleistung relativ gross zu halten, was insbesondere dem Strömungswiderstand des Filters erheblich vermindert.

Es sind bereits Prallflächenfilter an sich bekannt, die Durchbrüche in den Prallelementen für den Durchtritt der Gasströmung nach Ablagerung einer gewissen Menge an Schwebepartikeln gestatten. Bei allen diesen Filtern wird jedoch die Gasströmung stets in einen rundum geschlossenen Hohlraum eingeführt und durch die entsprechenden Durchbrüche wieder abgeführt, um überhaupt eine Gasströmung durch den Hohlraum zu ermöglichen. So werden bei einem Filter nach der US-A-1 159 073 durch seitlich aneinander angrenzende vertikale Prallwände zylindrische Hohlräume mit parallelogrammartiger Grundfläche gebildet, deren eine Diagonale in Strömungsrichtung liegt; durch Durchbrüche in den beiden anströmseitigen Wänden gelangt Gas in das Innere dieses Hohlraums und tritt durch entsprechende Durchbrüche in den abströmseitigen Wänden in einen folgenden Hohlraum wieder aus.

Im Falle von Filtern, wie sie aus der US-A-752 418 oder der DE-A-1 934 276 bekannt sind, sind stabartige, im Abstand voneinander verteilt angeordnete Filterelemente vorgesehen, die an ihrer Anströmseite Öffnungen für einen Eintritt der Gasströmung in den Innenraum des Hohlkörpers besitzen. An der in Strömungsrichtung hinteren Innenwand der Filterhohlkörper lagern sich darauf auftreffende Fluidteilchen ab und strömen unter Schwerkrafteinwirkung nach unten. Da ein solches Eindringen in den Innenraum der Filterhohlkörper eine Durchtrittsströmung durch den Hohlkörper voraussetzt, da dieser sonst nur ruhendes Gas enthalten könnte, sind in den Seitenwänden der Filterhohlkörper runde, schlitz- oder langlochartige Gasaustrittsöffnungen vorgesehen, durch welche hindurch das Gas wieder den Hohlkörper verlassen kann und neuem Gas den Zutritt ermöglicht. Die Filterhohlkörper gemäss der US-A-752 418 sind dabei mit anströmseitig divergierenden Führungsflächen versehen, welche die ankommende Strömung auf die Gaseinlassöffnungen der Filterhohlkörper richten, so dass dieses Filter extrem hohen Strömungswiderstand besitzt und die Ausbildung eines Luftpolsters im Inneren der Filterhohlkörper nicht ausreichend vermieden werden kann. Beim Filter nach der DE-A-1 934 276 wird der Strömungswiderstand dadurch herabgesetzt, dass die Filterhohlkörper ein strömungsgünstiges Profil mit in Strömungsrichtung liegender Längsachse aufweisen. Dies führt aber wieder dazu, dass nur ein ganz geringer Teil der Gasströmung überhaupt in den Innenraum der Filterhohlkörper eindringt, während der überwiegende Teil der Gasströmung die Filterhohlkörper umströmt und somit keiner intensiven Filterwirkung ausgesetzt ist. Tatsächlich soll hier auch die Abscheidung nicht primär im Inneren der Hohlkörper, sondern vielmehr an der Aussenwand der Hohlkörper erfolgen, und dient der hohle Innenraum der Filterhohlkörper zur Aufnahme des sich im vorderen Bereich an der Aussenwand niederschlagenden Flüssigkeitsfilmes, entspricht also in der Funktion der vertikalen Bohrung im Stab gemäss der gattungsgemässen US-A-692 390.

Die Unteransprüche haben vorteilhafte Weiterbildungen der Erfindung zum Inhalt. Das kennzeichnende Merkmal des Anspruchs 4 ist aus einem aus der US-A-1 134 633 ersichtlichen Abscheider für einen Speisewassererhitzer an sich bekannt, wobei jedoch der kürzere Schenkel des Profilstabes lediglich zur Bildung einer Ablaufrinne für niedergeschlagene Flüssigkeit am hinteren Ende der plattenförmigen Prallelemente dient und keinen wesentlichen Beitrag zur Erhöhung der Verwirbelung leistet.

Der Einbau eines erfindungsgemässen Filters in einen Abluftkanal erfolgt bevorzugt so, dass die Kanalwände im wesentlichen spielfrei an benachbarten Seiten des Filters anliegen, so dass keine aufwendigen Einbau- und Einpassungsmassnahmen erforderlich sind. Dabei können hinter dem erfindungsgemässen Filter bei Bedarf weitere Feinfilter der üblichen Bauart mit Feststoffbett vorgesehen sein, welche die geringen noch verbleibenden Restverunreinigungen abscheiden. Da diese Feinfilter durch die Vorfilterung nur noch minimal mit Verunreinigungen belastet sind, erhöht sich ihre Einsatzzeit bis zu einer gegebenenfalls erforderlichen Auswechselung um ein Vielfaches, beispielsweise von der Grössenordnung von Tagen auf die Grössenordnung von Monaten oder Jahren. Dadurch ist ein Schutz des hinter den Filtern liegenden Bereiches des Abluftkanales vor Fettverunreinigungen in ungleich höherem Masse gesichert, so dass neben zur Vermeidung von Wartungsarbeiten erforderlichen Verunreinigungsablagerungen an den Kanalwänden auch die Sicherungsmassnahmen gegen Brand vermindert werden können. Hierdurch wiederum vermindert sich der Bauaufwand und vereinfacht sich die behördliche Endabnahme ganz erheblich.

Die Erfindung wird nachstehend anhand einer zeichnerisch dargestellten Ausführungsform näher erläutert.

Es zeigt:

Fig. 1 einen schematischen Längsschnitt durch einen Abluftkanal mit einem erfindungsgemässen Filter, im wesentlichen gemäss Linie I–I in Fig. 2;

Fig. 2 einen Teilschnitt durch den Abluftkanal im Bereich des Filters gemäss Linie II–II in Fig. 1;

Fig. 3 einen Schnitt gemäss Linie III–III in Fig. 1 und

Fig. 4 in vergrösserter Darstellung eine perspektivische Ansicht des Oberteils eines Stabes des Filters gemäss den Fig. 1 bis 3.

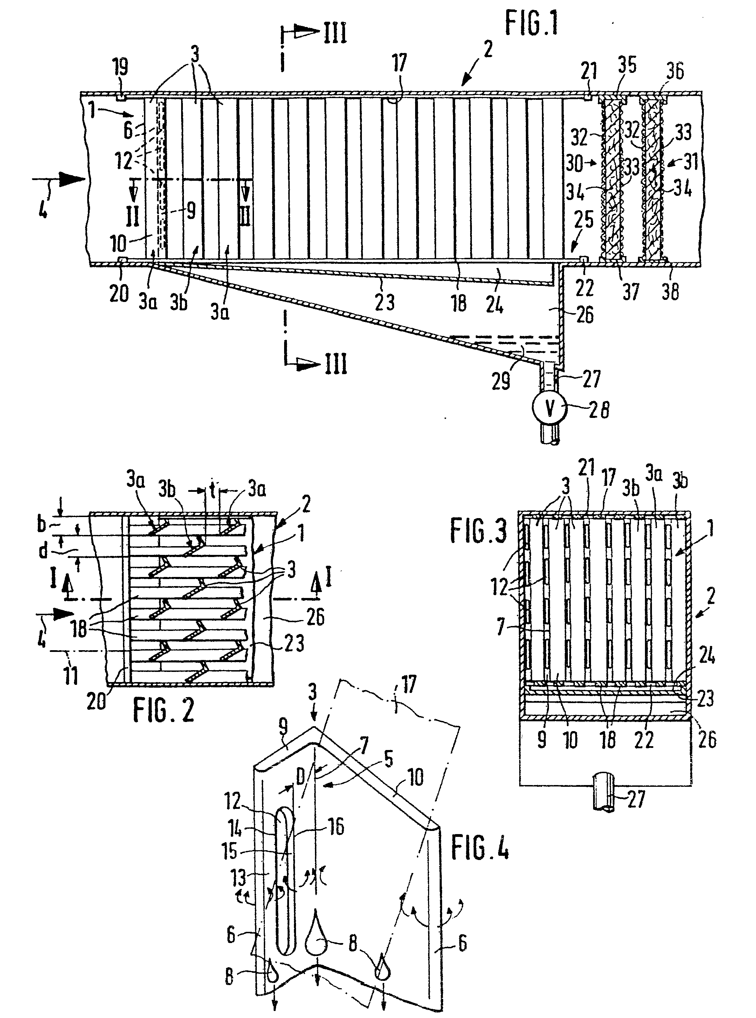

In der aus den Fig. 1 bis 3 ersichtlichen Weise ist ein insgesamt mit 1 bezeichnetes erfindungsgemässes Filter in einen Abluftkanal 2 eingesetzt, wie er insbesondere zur Abführung der Abluft aus Grossküchen verwendet werden kann.

Das Filter 1, welches eine Länge von mehr als einem halben Meter aufweisen kann, besteht im wesentlichen aus im Beispielsfalle wenigstens annähernd senkrecht angeordneten Stäben 3, mit einer solchen Ausbildung, wie dies in Fig. 4 anhand eines vergrössert dargestellten Oberteils eines solchen Stabes 3 veranschaulicht ist. Die Stäbe 3 sind, wie insbesondere aus Fig. 2 ersichtlich ist, in quer zur Strömungsrichtung gemäss Pfeil 4 angeordneten Reihen 3a und 3b ausgerichtet, die alternierend aufeinanderfolgen. Dabei sind die Stäbe 3 des einen Typs von Reihen 3a gegenüber den Stäben des anderen Typs von Reihen 3b auf Lücke versetzt angeordnet, ansonsten sind die Reihen 3a und 3b gleich ausgebildet. Der seitliche Abstand d zwischen Einzelstäben 3 einer Stabreihe 3a oder 3b sollte, um eine intensive Verwirbelung der Luft zu gewährleisten, nicht zu gross gehalten werden, wobei das Doppelte der ebenfalls quer zur Strömungsrichtung (Pfeil 4) gemessenen Gesamtbreite b eines Einzelstabes 3 nicht überschritten werden sollte. Im Beispielsfalle entspricht der seitliche Abstand d zwischen den Einzelstäben 3 einer Reihe 3a oder 3b gerade der Breite b eines Einzelstabes 3, so dass, wie dies aus Fig. 3 ersichtlich ist, zwei hintereinanderliegende Reihen 3a und 3b in der Draufsicht den Querschnitt des Filters 1 gerade voll abdecken. Die Strömung muss dann in akzentuierten Biegungen um die Stäbe 3 der aufeinanderfolgenden Reihen 3a und 3b verlaufen, wodurch eine Auszentrifugierung der in der Luft schwebenden Fettpartikeln erfolgt, die an den dabei in der Strömung liegenden festen Flächen insbesondere der Stäbe 3 haften bleiben.

Zur weiteren Verbesserung der Beaufschlagung der Stäbe 3 mit Fettpartikeln und damit der Abscheidung dieser Fettpartikel aus der Abluftströmung sind die Stäbe 3 in besonderer Weise ausgebildet und entspricht der in Strömungsrichtung gemäss Pfeil 4 gemessene freie Abstand t zwischen den Stäben 3 aufeinanderfolgender Stabreihen 3a und 3b etwa dem seitlichen Abstand d zwischen benachbarten Einzelstäben 3 einer Reihe 3a oder 3b, wobei im Beispielsfalle ein demgegenüber geringfügig verringerter Abstand t gewählt ist.

Wie sich insbesondere aus den Fig. 2 und 4 ergibt, sind die Stäbe 3 an ihrer Anströmseite gemäss Pfeil 4 mit einer zur Längsrichtung des Stabes parallelen Rinne 5 versehen. Die Abluft, die sich an den Seitenkanten 6 der Rinne 5 in der in Fig. 4 angedeuteten Weise bricht, wirbelt von beiden Seiten in die Rinne 5 hinein, so dass durch den Drall Fettpartikel insbesondere im Bereich des Scheitels 7 der Rinne 5 auszentrifugiert werden. Diese agglomerierenden auszentrifugierten Fettpartikel laufen als Fetttropfen 8 in der in Fig. 4 angedeuteten Weise bevorzugt im Bereich des Scheitels 7, aber auch an den übrigen Aussenflächen der Rinne 5 und insgesamt der Stäbe 3 durch Schwerkrafteinwirkung nach unten ab.

Im Beispielsfalle sind die Stäbe 3 als Profilstäbe mit V-förmigem Profil ausgebildet, so dass jeder Stab durch seine Grundform bereits die Rinne 5 bildet. Selbstverständlich käme auch eine abgerundete V-Form oder U-Form analog grundsätzlich in Frage.

Dabei hat es sich als besonders zweckmässig erwiesen, den einen Schenkel 9 des V-Profils kleiner zu halten als den anderen Schenkel 10, wobei eine Verkürzung des Schenkels 9 gegenüber dem Schenkel 10 um wenigstens die Hälfte gute Ergebnisse bringt. Insbesondere bei etwa parallel zur Strömungsrichtung gemäss Pfeil 4 angeordneter winkelhalbierender Mittellinie 11 des V-Profils (vgl. Fig. 2) wird hierdurch vermieden, dass die Rinne 5 ein dickes, ruhendes Luftpolster hält, welches ein Eindringen der Wirbel tief bis in den Bereich des Scheitels 7 der Rinne 5 und damit die Ablagerung von Fettpartikeln behindern würde. Ausserdem ergibt sich vermutlich eine Überlagerung der Ablösewirbel an den in Strömungsrichtung gemäss Pfeil 4 zueinander versetzten Kanten 6 der Schenkel 9 und 10 der Stäbe 3, welche ein vollständiges Eindringen der Wirbel weiter begünstigt und die Kollision spiegelbildlich symmetrischer Wirbelstrassen im Bereich um die Mittellinie 11 mit der Folge der Ausbildung eines Luftpolsters im Bereich des Scheitels 7 der Rinne 5 vermindert.

Dennoch lässt sich der kürzere Schenkel 9 des V-Profils nicht beliebig verkürzen, um ein Luftpolster im Bereich des Scheitels 7 der Rinne 5 zu vermeiden, da eine gewisse Mindestlänge erforderlich ist, um auch von der Kante 6 des Schenkels 9 aus eine Verwirbelung der dort auftreffenden Luftschichten in die Rinne 5 hinein zu gewährleisten. Wenn somit der kürzere Schenkel 9, um die Rinne 5 in gewissermassen von beiden Kanten 6 des Profils aus mit fetthaltiger Abluft zu beschicken, eine gewisse Mindestlänge aufweisen soll, so ist hierdurch die Ausbildung einer stationären Grenzschicht oder eines Luftpolsters im Bereich des Scheitels 7 in gewissem Umfange unvermeidlich, wenn auch durch die geschilderte unterschiedliche Schenkelausbildung vermindert. Zum weiteren Abbau eines solchen Luftpolsters ist daher vorgesehen, im Bereich des Scheitels 7 der Rinne 5 Durchbrüche 12 anzuordnen, durch welche die in die Rinne 5 eindringende Luft in der allgemeinen Strömungsrichtung gemäss Pfeil 4 abströmen kann und so ein Nachdringen weiterer Luft nicht behindert. Aus strömungstechnischer Sicht wäre dabei eine Anordnung der Durchbrüche 12, die in der aus Fig. 4 besonders gut ersichtlichen Weise als Langlöcher ausgebildet sind, direkt im Scheitel 7 wünschenswert, da hierdurch eine bestmögliche Abführung der in die Rinne 5 eingedrungenen Luft ermöglicht würde. Dann aber ginge der Scheitelbereich der Rinne 5 für den Ablauf der Fetttröpfchen 8 verloren, und würden diese im Gegenteil an weiter unten angeordneten Durchbrüchen 12 durch diese hindurch an der Rückseite des Stabes 3 ausgetrieben und wieder in den Luftstrom gelangen. Dabei ist weiter zu beachten, dass auch an den Profilschenkeln 9 und 10 in Strömungsrichtung vor dem Scheitel 7 der Rinne 5 agglomerierte Fetttröpfchen bei ihrer Wanderung nach unten durch die Luftbeaufschlagung zunehmend in den Bereich des eigentlichen Scheitels 7 getrieben werden, so dass ein Grossteil der im Oberteil der Stäbe 3 der Luft entzogenen Fettpartikel durch die Durchbrüche 12 direkt im Scheitel 7 hindurch wieder in den Luftstrom gelangen würden, bevor sie aus dem Luftstrom nach unten abgeführt werden können.

Daher sind die Durchbrüche 12, die im übrigen in der aus den Fig. 1 und 3 ersichtlichen Weise in einer zur Längsmittellinie der Stäbe 3 parallelen Reihe angeordnet und ausgerichtet sind, zwar im Bereich des Scheitels 7 angeordnet, jedoch diesem gegenüber soweit seitlich versetzt, dass zum Scheitel in der in Fig. 4 angedeuteten Weise ein Abstand D verbleibt, der eine ausreichende Menge an Fetttropfen ohne Störung durch die Durchbrüche aufnehmen kann. Dennoch erfolgt eine gute Abführung der in den Bereich des Scheitels 7 gelangenden Luft durch die Durchbrüche 12 hindurch, so dass schädliche Luftpolster vermieden sind.

Unter strömungstechnischen Gesichtspunkten stören dabei die zwischen den einzelnen als Langloch ausgebildeten Durchbrüchen 12 eines Einzelstabes 3 verbleibenden ungestörten Teile des mit den Durchbrüchen versehenen Schenkels 9, so dass der äussere Bereich 13 des Schenkels 9 zwischen seiner Kante 6 und dem in Strömungsrichtung vorderen Rand 14 der Durchbrüche 12 auch als vom Rest des Stabes 3 separates Bauteil ausgebildet werden könnte, welches lediglich zur zusätzlichen Verwirbelung vor der dann im Bereich des in Strömungsrichtung hinteren Randes 15 der Durchbrüche 12 liegenden Vorderkante des Schenkels 9 stehen würde. Entsprechend könnte auch anstelle einer Reihe mehrerer langlochartiger Durchbrüche 12 eine einzige, von der Oberseite zur Unterseite jedes Stabes 3 durchgehende Ausnehmung vorgesehen werden. Eine solche, strömungstechnisch optimale Ausbildung ergibt doch Festigkeitsprobleme mit Rücksicht auf die Ausbildung und Lagerung des über wenigstens fast die ganze Höhe des Abluftkanales 2 nicht abgestützten Stabes od. dgl. vor dem Schenkel 9, so dass zur Verbesserung der Festigkeit die geringfügigen strömungstechnischen Nachteile der ungestörten Wandbereiche des Schenkels 9 zwischen den Durchbrüchen 12 in Kauf genommen werden sollten.

Besonders gute Ergebnisse haben sich gezeigt, wenn die Reihe der Durchbrüche 12 in dem verkürzten Schenkel 9 angeordnet wird, da dies, jedenfalls im Rahmen der beispielhaft veranschaulichten Anordnung der Stäbe 3 gemäss Fig. 2, offenbar im Hinblick auf den verfolgten Zweck optimale Strömungsbedingungen ergibt. Eine weitere Verbesserung der Abscheidewirkung an den Stäben 3 lässt sich dadurch erzielen, dass die nachträgliche Einarbeitung der Durchbrüche 12 von der in der späteren Einbaulage abströmseitigen Fläche des Schenkels 9 her vorgenommen wird, so dass an den anströmseitigen Rändern der Durchbrüche 12 Bearbeitungsgrate 16 entstehen, die nicht beseitigt, sondern vielmehr stehengelassen werden. An diesen unregelmässigen Bearbeitungsgraten 16 erfolgt eine zusätzliche Störung der Luftströmung und dadurch Verwirbelung, welche die Abscheidung weiter begünstigt. Im übrigen sind die Stäbe 3 bevorzugt aus Stahl ausgebildet und in der in Fig. 4 angedeuteten Weise mit einer feinbearbeiteten, glatten Oberfläche versehen, welche ein behinderungsfreies Ablaufen der Fetttröpfchen begünstigt. Im Beispielsfalle mögen die Profilstäbe 3 aus rostfreiem Chromstahl mit einer äusseren Verchromung bestehen, die überdies ein ansprechendes Aussehen gewährleistet.

Die im Beispielsfalle in jeder zweiten Reihe 3a oder 3b miteinander in Strömungsrichtung gemäss Pfeil 4 fluchtenden Stäbe 3 sind an ihrer Oberseite durch Längsgurte 17 und an ihrer Unterseite durch Längsgurte 18 miteinander verbunden, die über die gesamte Länge des Filters 1 durchlaufen. Die Befestigung der Stäbe 3 an den Gurten 17 und 18 kann dabei durch Schweissen oder Punkten erfolgen, wofür eine geeignete Schablone verwendet werden kann. Um einen ungehinderten Ablauf der Fetttropfen 8 nach unten zu ermöglichen, ist der Bereich des Scheitels 7 der Rinne 5 jedenfalls von den unteren Gurten 18 nicht überdeckt. Im Beispielsfalle sind in der insbesondere aus Fig. 3 ersichtlichen Weise die unteren Gurte 18 mit einer gegenüber der Breite b der Einzelstäbe 3 etwa halben Breite ausgeführt und reichen somit von der Kante 6 des längeren Schenkels 10 bis vor den Scheitel 7 der Rinne 5, was für eine sichere Befestigung völlig genügt. Zur Veranschaulichung ist in Fig. 4 strichpunktiert der Verlauf eines oberen Gurtes 17 am Stab 3 eingezeichnet, wobei im Beispielsfalle die oberen Gurte 17 genauso wie die unteren Gurte 18 ausgebildet und angeordnet sind. An ihren vorderen und hinteren Enden sind die beispielsweise als Flacheisen ausgebildeten Haltegurte 17 und 18 durch ähnlich ausgebildete Quergurte 19, 20, 21 und 22 miteinander verbunden und so in ihrer gegenseitigen Lage gesichert.

Da die Anströmung durch die Abluft die Tropfen 8 an den Flächen der V-förmigen Stäbe in Richtung auf den Scheitel 7 der Rinne 5 zu treiben sucht, behindern die unteren Gurte 18, die neben dem Scheitel 7 enden, den Abfluss der Tropfen über das untere Ende der Stäbe 3 hinaus nicht. Von dort fallen die Tropfen auf eine Ablaufplatte 23, die an der Aussenseite der unteren Gurte 18 im Bereich des vorderen Endes des Filters 1 befestigt ist und sich von dort unter Bildung eines schmalen, sich vergrössernden Spaltes 24 nach vorne erstreckt. Dabei endet die Ablaufplatte 23 vor dem in Strömungsrichtung gemäss Pfeil 4 hinteren Lagerende 25 des Filters 1, so dass das Fett von dort in einen Auffangraum 26 laufen kann. In einem unteren Bereich des Auffangraumes 26 ist eine Ablaufleitung 27 angeschlossen, die im Beispielsfalle durch ein Absperrorgan 28 abschliessbar ist. Auf diese Weise kann das Filter 1 über eine lange Zeitspanne arbeiten und kontinuierlich Fett über die Ablaufplatte 23 in den Auffangraum 26 abscheiden, während das Absperrorgan 28 geschlossen ist, so dass sich im unteren Bereich des Auffangraumes 28 ein Fettbad 29 bildet. In grösseren Zeitabständen kann dann das Absperrorgan 28 geöffnet werden, um den Auffangraum 26 periodisch zu entleeren. Damit ist vermieden, dass an irgendeiner Stelle kontinuierlich langsam abtropfendes Fett aufgefangen werden muss, was höheren Aufwand erfordert, als von Zeit zu Zeit mit einem geeigneten Gefäss den Auffangraum 26 abzulassen.

Im Bereich des hinteren Lagerendes 25 des Filters 1 ist die Abluft weitestgehend von allen Fettpartikeln und auch sonstigen Verunreinigungen befreit, die wiederum am Fett haftend mit diesem abgeführt werden. Daher könnte auf weitere Filtermassnahmen verzichtet werden. Jedoch ist dabei zu beachten, dass das Filter 1 seine Filterwirkung bei gegebener Bauart in Abhängigkeit von der Länge des Filters 1 leistet, so dass theoretisch eine absolut vollständige Ausfilterung erst bei einer unendlichen Filterlänge erreicht würde. Daher muss ein optimaler Kompromiss gesucht werden, bei dem zwar der bauliche und räumliche Aufwand für das Filter 1 noch auf einen vernünftigen Wert begrenzt ist, jedoch bereits eine für den vorliegenden Zweck ausreichende Vollständigkeit der Ausfilterung gewährleistet ist. Dies führt dazu, dass hinter dem Filter 1 immer noch Verunreinigungen, auch Fettpartikel, in der Abluft enthalten sind, wenn auch in einer um Grössenordnungen geringeren Konzentration als vor dem Filter 1. Wenn diese in den weiteren Verlauf des Abluftkanales 2 weitergeführt werden, so arbeitet das Filter 1 von der Filterwirkung her im Ergebnis ähnlich wie herkömmliche Filter, jedoch mit dem Vorteil, dass eine ständige Selbstregenerierung erfolgt und eine Wartung od. dgl., abgesehen gegebenenfalls vom Ablassen des Auffangraumes 26 in grösseren Zeitabständen, nicht erforderlich ist. Eine Nachschaltung von Feinfiltern 30 und 31, die von üblicher Bauart mit vorderen und hinteren Siebwänden 32 und 33 mit zwischengelagertem Feststoffbett 34 sein können, ergibt jedoch den zusätzlichen Vorteil, dass hinter dem letzten Filter 31 Fettpartikel in der Abluft praktisch gar nicht mehr messbar vorliegen, also die Abluft nicht mehr fetthaltig ist und somit auch die Schutzmassnahmen gegen Brandgefahr usw. entfallen können. Dennoch aber müssen die Filter 30 und 31 nur in ausserordentlich grossen Zeitabständen ausgewechselt werden, da sie hinter dem Filter 1 nur sehr geringfügig mit Fettpartikelanfall belastet sind. Zur Auswechselung können die Filter 30 und 31 in der üblichen Weise an Führungsschienen 35, 36, 37 und 38 seitlich aus dem Abluftkanal 2 herausgezogen werden.

**Patentansprüche**

1. Filter zur Ausfilterung von fettartigen oder öligen Teilchen aus einem Gasstrom, insbesondere aus Küchenabluft, mit einer Vielzahl von wenigstens annähernd parallel zueinander angeordneten, in der Einbaulage des Filters aufrecht stehenden Profil-Stäben (3) mit zwei eine zur Anströmseite hin offene Rinne begrenzenden Schenkeln (9, 10), die über einen in Anströmrichtung hinteren Scheitel (7) miteinander verbunden sind, wobei in den Profilstäben in der Wand der Rinne mündende Durchtrittsöffnungen (12) vorgesehen sind, dadurch gekennzeichnet, dass die Durchtrittsöffnungen (12) als parallel zur Längserstrekkung der Stäbe (3) liegende, langlochartige Durchbrüche ausgebildet sind, die auf der abströmseitigen Oberfläche der Stäbe (3) ausmünden.

2. Filter nach Anspruch 1, dadurch gekennzeichnet, dass eine Mehrzahl langlochartiger Durchbrüche (12) jedes einzelnen Stabes (3) in einer fluchtenden Reihe angeordnet ist.

3. Filter nach Anspruch 1 oder 2, dadurch gekennzeichnet, dass die Durchbrüche (12) an ihrer anströmseitigen Mündung einen Bearbeitungsgrat (16) aufweisen.

4. Filter nach einem der Ansprüche 1 bis 3, dadurch gekennzeichnet, dass einer der Schenkel (9) des Profilstabes (3) vorzugsweise um wenigstens die Hälfte gegenüber dem anderen Schenkel (10) verkürzt ist.

5. Filter nach Anspruch 4, dadurch gekennzeichnet, dass der kürzere Schenkel (9) des im Querschnitt V-profilartigen Stabes (3) die Durchbrüche (12) aufweist.

6. Filter nach einem der Ansprüche 1 bis 5, dadurch gekennzeichnet, dass die Durchbrüche (12) im Bereich des Scheitels (7) der Rinne (5) angeordnet sind.

7. Filter nach Anspruch 6, dadurch gekennzeichnet, dass die Durchbrüche (12) knapp neben dem Scheitel (7) der Rinne (5) angeordnet sind.

8. Filter nach einem der Ansprüche 1 bis 7, dadurch gekennzeichnet, dass die Stäbe (3) aus Stahl, vorzugsweise rostfreiem Stahl, bestehen.

9. Filter nach einem der Ansprüche 1 bis 8, dadurch gekennzeichnet, dass die Stäbe (3) an ihren Aussenflächen – gegebenenfalls mit Ausnahme der Bearbeitungsgrate (16) an den Durchbrüchen (12) – glatt, insbesondere mit einer einer Polierung entsprechenden Oberflächengüte ausgebildet, vorzugsweise verchromt sind.

10. Filter nach einem der Ansprüche 1 bis 9, dadurch gekennzeichnet, dass die Enden von in einer Richtung (Pfeil 4) fluchtenden Stäben (3) an Haltegurten (17 bzw. 18) eines Haltegitters aus parallelen, im Abstand voneinander liegenden Haltegurten (17 bzw. 18) befestigt sind, wobei die Haltegurte (17, 18) vorzugsweise in Strömungsrichtung (Pfeil 4) angeordnet und wenigstens im Bereich ihrer Enden durch Quergurte (19, 20, 21, 22) lagegesichert sind.

11. Filter nach einem der Ansprüche 1 bis 10, dadurch gekennzeichnet, dass an der in Einbaulage unteren Seite der Stäbe (3) eine Ablaufplatte (23) vorgesehen ist, die einen sich in Strömungsrichtung (Pfeil 4) erweiternden engen Spalt (24) zu den Stabenden hin bildet.

12. Filter nach Anspruch 11, dadurch gekennzeichnet, dass die Ablaufplatte (23) vor dem hinteren Lagerende (25) des Filters (1) endet.

13. Abluftkanal, insbesondere für Grossküchen, mit einem Filter nach wenigstens einem der Ansprüche 1 bis 12, dadurch gekennzeichnet, dass die Kanalwände im wesentlichen spielfrei an benachbarten Seiten des Filters (1) anliegen.

14. Abluftkanal nach Anspruch 13, mit einem Filter nach Anspruch 12, dadurch gekennzeichnet, dass am Ende der Ablaufplatte (23) ein Auffangraum (26) für die ablaufenden Filterrückstände vorgesehen ist, an den eine Ablaufleitung (27) angeschlossen ist.

15. Abluftkanal nach Anspruch 14, dadurch gekennzeichnet, dass die Ablaufleitung (27) strömungsdicht abschliessbar ist.

**Claims**

1. A filter for filtering out fatty or oily particles from a current of gas in particular from kitchen waste with plurality of profiled rods (3) disposed at least approximately parallel to one another standing upright in the constructional position of the filter, with two arms (9, 10) bounding a trough open towards the flow side which arms are connected to one another via a rear apex in the flow direction whereby in the profiled rods passage openings (12) leading into the wall of the trough are provided, characterised in that the passage openings (12) are formed as long hole-like cutouts lying parallel to the longitudinal extension of the rods (3) which cutouts lead out on the flow-off side upper surface of the rods (3).

2. A filter according to claim 1, characterised in that a plurality of long hole-like cutouts (12) of each individual rod (3) is disposed in a flush row.

3. A filter according to claim 1 or 2, characterised in that the cutouts (12) have a flash (16) on their flow side opening.

4. A filter according to one of the claims 1 to 3, characterised in that one of the arms (9) of the profiled rods (3) is shortened preferably by at least half in respect of the other arms (10).

5. A filter according to claim 4, characterised in that the shorter arms (9) of the rod (3) V-profile-like in cross section has the cutouts (12).

6. A filter according to one of the claims 1 to 5, characterised in that the cutouts (12) are disposed in the in the area of the apex (7) of the trough (5).

7. A filter according to claim 6, characterised in that the cutouts (12) are disposed close beside the apex (7) of the trough (5).

8. A filter according to one of the claims 1 to 7, characterised in that the rods (3) consist of steel, preferably stainless steel.

9. A filter according to one of the claims 1 to 8, characterised in that the rods (3) are formed smooth on their outer faces as the case may be with the exception of the flash (16) on the cutouts (12) in particular with a surface quality corresponding to a polishing and preferably chromium plated.

10. A filter according to one of the claims 1 to 9, characterised in that the ends of rods (3) in line in one direction (arrow 4) are fixed on holding belts (17 and 18 respectively) of a holding grating made of parallel holding belts (17 and 18 respectively) lying spaced apart from one another whereby the holding belts (17, 18) are disposed preferably in the direction of flow (arrow 4) and are secured in position at least in the region of their ends by cross-belts (19, 20, 21, 22).

11. A filter according to one of the claims 1 to 10, characterised in that on the lower side of the rods (3) in the built in position a run off-plate (23) is provided which forms a narrow gap (24) widening in the direction of flow (arrow 4) towards the ends of the rods.

12. A filter according to claim 11, characterised in that the run-off plate (23) terminates before the rear end of the bearing (25) of the filter (1).

13. A waste air duct in particular for catering kitchens with a filter according to at least one of the claims 1 to 12, characterised in that the walls of the duct lie substantially free of spacing on the adjacent side of the filter (1).

14. A waste air duct according to claim 13, with a filter according to claim 12, characterised in that at the end of the run-off plate (23) a takeup space (26) for the running off filter residues is provided on which a run-off pipe (27) is connected.

15. A waste air duct according to claim 14 characterised in that the run-off pipe (27) is closable flow-tight.

**Revendications**

1. Filtre pour extraction par filtration de particules de graisse ou d'huile dans un courant gazeux en particulier dans l'air évacué des cuisines, comportant un grand nombre de barreaux profilés (3), disposés au moins approximativement parallèlement l'un à l'autre, verticaux dans la position de montage du filtre, lesdits barreaux ayant deux ailes (9, 10) qui limitent une goulotte ouverte en direction du côté amont et sont reliées l'une à l'autre par l'intermédiaire d'un sommet (7) en arrière dans le sens de l'écoulement, des ouvertures de passages (12) qui débouchent dans la paroi de la goulotte étant prévues dans les barreaux profilés, caractérisé en ce que les ouvertures de passage (12) sont conçues comme découpes, en forme de lumière longitudinale, situées parallèlement à l'extension longitudinale des barreaux (3) et débouchant sur la surface aval des barreaux (3).

2. Filtre selon la revendication 1, caractérisé en ce qu'un grand nombre de découpes (12), en forme de lumière longitudinale, de chaque barreau (3) sont disposées en une file en alignement.

3. Filtre selon la revendication 1 ou la revendication 2, caractérisé en ce que les découpes (12) présentent, à leur embouchure amont, une bavure d'usinage (16).

4. Filtre selon l'une des revendications 1 à 3, caractérisé en ce que l'une des ailes (9) du barreau profilé (3) est plus courte, de préférence d'au moins la moitié, par rapport à l'autre aile (10).

5. Filtre selon la revendication 4, caractérisé en ce que c'est l'aile (9) la plus courte du barreau (3) à profil en V en coupe, qui présente les découpes (12).

6. Filtre selon l'une des revendications 1 à 5, caractérisé en ce que les découpes (12) sont disposées dans la zone du sommet (7) de la goulotte (5).

7. Filtre selon la revendication 6, caractérisé en ce que les découpes (12) sont disposées juste à côté du sommet (7) de la goulotte (5).

8. Filtre selon l'une des revendications 1 à 7, caractérisé en ce que les barreaux (3) sont en acier de préférence en acier inoxydable.

9. Filtre selon l'une des revendications 1 à 8, caractérisé en ce que les barreaux (3) ont des surfaces extérieures lisses – éventuellement à l'exception de la bavure d'usinage (16) sur les découpes (12) –, en particulier ont une qualité de surface correspondant à un polissage, et de préférence sont chromés.

10. Filtre selon l'une des revendications 1 à 9, caractérisé en ce que les extrémités des barreaux (3) alignées dans une direction (flèche 4) sont fixées à des ceintures (17 ou 18) d'une grille de fixation constituée de ceintures (17, 18) situées parallèlement à une certaine distance l'une de l'autre, les ceintures (17, 18) étant de préférence disposées dans le sens de l'écoulement (flèche 4) et leur position étant fixée, au moins dans la zone de leurs extrémités, par des ceintures transversales (19, 20, 21, 22).

11. Filtre selon l'une des revendications 1 à 10, caractérisé en ce qu'il est prévu, contre la face inférieure des barreaux (3) en position de montage, une plaque d'écoulement (23) qui forme une fente (24) étroite qui va en s'élargissant dans le sens de l'écoulement (flèche 4) jusqu'à l'extrémité des barreaux.

12. Filtre selon la revendication 11, caractérisé en ce que la plaque d'écoulement (23) se termine devant le support d'extrémité arrière (25) du filtre (1).

13. Gaine d'évacuation d'air, en particulier pour grandes cuisines, comportant un filtre selon au moins l'une des revendications 1 à 12, caractérisée en ce que les parois de la gaine s'appuient essentiellement sans jeu contre les faces voisines du filtre (1).

14. Gaine d'évacuation d'air, selon la revendication 13, comportant un filtre selon la revendication 12, caractérisée en ce qu'à une extrémité de la plaque d'écoulement (23) est prévu une chambre de réception (26) pour les résidus de filtration qui s'écoulent et à laquelle est raccordée une conduite d'écoulement (27).

15. Gaine d'évacuation d'air selon la revendication 14, caractérisée en ce que la conduite d'écoulement (27) peut s'obturer en assurant l'étanchéité à l'égard du courant d'air évacué.

0 007 385

FIG.1

FIG.2

FIG.3

FIG.4

9